# EUROPEAN PATENT SPECIFICATION

(11) **EP 2 613 651 B1**
(45) Date of publication and mention of the grant of the patent: **19.12.2018**
(21) Application number: 11746545.0
(22) Date of filing: 22.08.2011
(51) Int. Cl.: A23L 2/60, A23L 27/30, A23L 27/00, A23L 33/20

(54) **A STEVIA-BASED IMPROVED SWEETENING COMPOSITION AND EDIBLE PRODUCTS MADE THEREWITH**
VERBESSERTE SÜßSTOFFZUSAMMENSETZUNG AUF DER BASIS VON STEVIA UND DAMIT HERGESTELLTE ESSBARE PRODUKTE
COMPOSITION ÉDULCORANTE AMÉLIORÉE À BASE DE STÉVIA ET PRODUITS COMESTIBLES FABRIQUÉS AVEC CELLE-CI

(30) Priority: 10.09.2010 EP 10176118
(43) Date of publication of application: 17.07.2013
(73) Proprietor: Nestec S.A., 1800 Vevey (CH)
(72) Inventor: GALINDO CUSPINERA, Veronica, NL-3511 RA Utrecht (NL); GODINOT, Nicolas, Beijing 100125 (CN); MARTIN, Nathalie Marguerite Claire, CH-1068 Les Monts de Pully (CH)
(74) Representative: Elleby, Gudrun
(86) International application number: PCT/EP2011/064335
(87) International publication number: WO 2012/031879

(56) References cited:
- EP-A1- 1 210 880
- JP-A- 4 104 778
- US-A1- 2008 107 787
- FRANK ROBERT A ET AL: "The effect of Gymnema sylvestre extracts on the sweetness of eight sweeteners", CHEMICAL SENSES, IRL PRESS, OXFORD, GB, vol. 17, no. 5, 1 January 1992 (1992-01-01), pages 461-479, XP008108348, ISSN: 0379-864X
- "Sweetener and foodstuff used in various foods and drink - contg. glycoside substance Z prepd. from stevia rebaudiana bertoni", DERWENT, 1991, XP002214848,

## Description

### Field of the invention

The present invention concerns a sweetening composition comprising a stevia extract, which has improved taste properties over currently known stevia sweetening compositions.

### Background of the invention

In order to replace sugar, especially cane sugar (sucrose), many different molecules are used, either natural or artificial. The interest of such molecules is that the sweetening effect can be obtained in the final food composition while at the same time guaranteeing a much lower caloric intake for the consumer.

Artificial sweeteners, although widely used, show a tendency to be replaced recently by other compounds, which are extracted directly from plants. Such natural sweeteners offer similar sweetening properties, a low caloric intake to the consumer, and they are not produced by heavy chemical processes which is seen by the consumers as a clear advantage.

Amongst other natural sweeteners, Stevia is known for a long time for its sweetening properties. It has a long history of use in Asia or in South America for these sweetening properties, and recently, it has gained a lot of interest in North America and Europe for it is extracted directly from a plant source, and is therefore a natural ingredient, compared to other known sweeteners, like artificial sweeteners such as aspartame or saccharine for instance.

Usually, the principal active compound of Stevia that is used for sweetening is rebaudioside A (Reb A). This compound is obtained for instance by purification of the Stevia extracts. In the following description, it should be understood that preferably, Reb A shall be used for sweetening, even though the description mentions "Stevia" in general.

One drawback of Stevia though, is its relatively strong lingering sweet aftertaste. This aftertaste is structure related and is made evident by the fact that the sweetening taste can be perceived a long time after the Stevia was in contact with the tongue (up to 2 hours).

In order to mask this aftertaste, different solutions have been tested and commercialised, which are directed to mixing Stevia with flavouring compounds and aromas that create a specific organoleptic profile. For instance, the Reb A can be mixed as a powder with a vanilla flavour. However, although the aromatic profile of such mixes can prove to be pleasant to taste, in practice, it does not solve the lingering taste issue.

US 2008/107787 A1 relates to anti-diabetic compositions comprising non-caloric or low-caloric high-potency sweeteners such as rebaudioside and anti-diabetic substances. In US 2008/107787 A1 discloses a combinations of at least one natural and/or synthetic high-potency sweetener and at least one sweet taste improving composition suppress, reduce, or eliminate undesirable taste and impart sugar-like characteristics to the sweetener composition. This combination does not include gymnemic acid.

Frank Robert A. et al (Chemical Senses, IRL Press, OXFORD, GB, Vol 17, No 5, 1992, 461-479) evaluates the sweetness-inhibiting effects of Gymnema sylvestre extracts on three concentrations each of acesulfame K, aspartame, sodium cyclamate, fructose, glucose, sucrose, stevioside and xylitol. In this publication the percentage reduction in sweetness was found to be constant across the low, medium and high concentrations of the sweeteners. XP008108348 does not disclose mixing in certain concentrations the rebaudioside A with gymnemic acid.

JP 4 104778 relates to low-calorie drinks, which have improved taste and is free from long existing sweetness. The sweetener disclosed in JP 4 104778 has a having high sweetness with gymnemic acid in an amount of 0.5ppb-25ppm.

The main objective of the present invention is therefore to provide an all-natural sweetening composition based on stevia or its purified active compounds such as Reb A, with similar or unchanged sweetening intensity, while solving the lingering taste issue described above.

### Summary of the invention

The above objective is met with a composition for sweetening an edible product, comprising at least a rebaudioside, characterized in that it further comprises gymnemic acid, wherein the ratio gymnemic acid to rebaudioside is comprised between 2 to 4 parts of rebaudioside for 1 part of gymnemic acid and wherein said gymnemic acid is present in a concentration comprised between 100 and 180 ppm.

It has been found that surprisingly, when a stevia extract, or a rebaudioside A extracted and purified from stevia is mixed in certain concentrations with gymnemic acid, the lingering sweet aftertaste usually present in Stevia alone disappears. This property of gymnemic acid to stop the lingering sweet aftertaste of stevia (or Reb A) was moreover found to have a very limited effect on the sweetening intensity of stevia.

Therefore, when Rebaudioside A and gymnemic acid are mixed in correct concentrations - depending on the food composition they will be added to -, the sweet profile approaches very much, and is almost equal in some cases to the sweet profile of sucrose, in terms of intensity, in terms of duration of the sweetening taste perceived by the consumer, and in terms of sweetening taste quality. The fact that the sweetening taste is not reduced in intensity is particularly important since there is therefore no need to compensate lower sweetness intensity by adding more sweetener and/or different types of sweetening agents.

In the present invention, the ratio rebaudioside to gymnemic acid is comprised between 2 to 4 parts of rebaudioside for 1 part of gymnemic acid.

This specific ratio of course depends on the concentration of sweetener(s) in the final food product, and may be adapted to the taste of consumers. But it was found that this specific ratio range has the highest efficacy on selectively suppressing the lingering aftertaste of Stevia, while not putting at stake the sweetness intensity. It was found that beyond this range, the effect of gymnemic acid is either too weak to mask the lingering aftertaste, or on the contrary, it not only blocks the aftertaste, but also blocks the sweetness intensity.

Preferably, said gymnemic acid is present in said composition as an extract of the Gymnema Sylvestre plant.

Furthermore, the rebaudioside is rebaudioside A, which is present in said composition as a stevia plant extract, which is even more preferably purified so that it contains more than 97, preferably more than 99% of rebaudioside A.

Gymnemic acid is present in the composition according to the invention in a concentration comprised between 100 to 180 ppm.

This concentration corresponds, having regard to the preferred ratio of concentrations of gymnemic acid and rebaudioside, to the optimized concentrations of rebaudioside that should be present in different food products to obtain an acceptable sweet taste in the latter.

In one possible alternative embodiment of the present invention, the composition further comprises at least one second sweetening agent selected from the list of:
(i) natural sweeteners such as Momordica Grosvenorii (Mogrosides IV or V), Thaumatin, Brazzein, Glycyrrhyzic acid and its salts, Curculin, Monellin, Phylloducin, Rubusosides, Mabinlin, dulcoside A, dulcoside B, stevioside, siamenoside, monatin and its salts (monatin SS, RR, RS, SR), hernandulcin, phyllodulcin, glycyphyllin, phloridzin, trilobatin, baiyunoside, osladin, polypodoside A, pterocaryoside A, pterocaryoside B, mukurozioside, phlomisoside I, periandrin I, abrusoside A, cyclocarioside I, erythritol, and/or other natural polyols such as maltitol, mannitol, lactitol, sorbitol, inositol, Isomalt, xylitol, glycerol, propylene glycol, threitol, galactitol, reduced isomalto-oligosaccharides, palatinose, reduced xylo-oligosaccharides, reduced gentio-oligosaccharides, reduced maltose syrup, or reduced glucose syrup, or a mixture thereof, and/or
(ii) artificial sweeteners, such as Aspartame, Cyclamate, Sucralose, Acesulfame K, neotame, Saccharin, Neohesperidin dihydrochalcone, or mixtures thereof.

By adding at least one additional sweetener to the composition, the sweet taste profile can be fine-tuned and adapted to specific food compositions wherein said composition is used. This is due to the fact that artificial sweeteners are known to have synergistic effect among them and minor variations in the sweet taste perception may also occur, due to the interaction of rebaudioside with other ingredients (aromas, fat components for instance) that are present in the said food compositions.

The composition according to the invention can further comprise at least one sweet taste improving carbohydrate, chosen from the list of, but not limited to, sucrose, fructose, glucose, maltose, lactose, mannose, galactose, ribose, rhamnose, trehalose, tagatose, high fructose corn syrup (HFCS).

The composition according to the invention can be a powder to be added directly into a food product with other ingredients. Alternatively, it can be a liquid, viscous, or at least partly jellified composition suitable for being sprayed onto and/or injected into an edible product.

The present invention is further directed to a sweetened food composition comprising at least a rebaudioside as a sweetening agent, characterized in that said food composition further comprises gymnemic acid as a sweet lingering taste stopper, and wherein said gymnemic acid is present in a concentration comprised between 100 and 180 ppm.

In the present invention the ratio gymnemic acid to rebaudioside is comprised between 2 to 4 parts of gymnemic acid for 1 part of rebaudioside.

Further, gymnemic acid is advantageously present in said composition as an extract of Gymnema Sylvestre.

Preferably, the rebaudioside is rebaudioside A, which is present in said composition as a stevia extract. More than that, said stevia extract is preferably purified so that it contains more than 97, preferably more than 99% of rebaudioside A.

The gymnemic acid is present in a concentration comprises between 100 to 180 ppm.

In one embodiment of the invention, the food composition can further comprise at least one second sweetening agent selected from the list of:
(i) natural sweeteners such as Momordica Grosvenorii (Mogrosides IV or V), Thaumatin, Brazzein, Glycyrrhyzic acid and its salts, Curculin, Monellin, Phylloducin, Rubusosides, Mabinlin, dulcoside A, dulcoside B, stevioside, siamenoside, monatin and its salts (monatin SS, RR, RS, SR), thaumatin, hernandulcin, phyllodulcin, glycyphyllin, phloridzin, trilobatin, baiyunoside, osladin, polypodoside A, pterocaryoside A, pterocaryoside B, mukurozioside, phlomisoside I, periandrin I, abrusoside A, cyclocarioside I, erythritol, and/or other natural polyols such as maltitol, mannitol, lactitol, sorbitol, inositol, Isomalt, xylitol, glycerol, propylene glycol, threitol, galactitol, reduced isomalto-oligosaccharides, palatinose, reduced xylo-oligosaccharides, reduced gentio-oligosaccharides, reduced maltose syrup, or reduced glucose syrup, or a mixture thereof, and/or
(ii) artificial sweeteners, such as Aspartame, Cyclamate, Sucralose, Acesulfame K, neotame, Saccharin, Neohesperidin dihydrochalcone, or mixtures thereof.

In another embodiment of the invention, the food composition can further comprise at least one sweet taste improving carbohydrate, chosen from the list of, but not limited to, sucrose, fructose, glucose, maltose, lactose, mannose, galactose, ribose, rhamnose, trehalose, tagatose, high fructose corn syrup (HFCS)

The food composition according to the present invention can be:
(i) a ready-to-drink beverage comprising at least coffee, tea, cocoa, cereals, or a combination thereof, or
(ii) a water-based beverage comprising, at least one natural or artificial flavor, at least one fruit extract, at least one preservative, at least one mineral salt, or a combination thereof.

It can also be a chilled dairy product comprising a fresh cheese, a dessert comprising at least one dairy component, an ice cream, a dairy culinary preparation, a sweetened condensed milk or a combination thereof.

Alternatively, it can be a confectionery product, or a bakery product.

### Brief description of the drawings

Additional features and advantages of the present invention are described in, and will be apparent from, the description of the presently preferred embodiments which are set out below with reference to the drawings in which:
**Figure 1** is a schematic diagram showing the evolution of sweetness intensity over time, between rebaudioside A and sucrose;
**Figure 2** is a schematic diagram illustrating the change of persistency as a function of sweetness, among different samples of sweeteners mixed with gymnemic acid in different concentrations, and wherein the reference point is the sweetener taken alone;
**Figure 3** is a schematic diagram illustrating the effect of gymnemic acid on sweetness and persistency in Stevia (Reb A);
**Figure 4** is a schematic diagram illustrating the modifications of sweetness when very small amounts of gymnemic acid are used.

### Detailed description of the invention

One first aspect of the present invention is directed to composition for sweetening an edible product, comprising at least a rebaudioside, which further comprises gymnemic acid wherein the ratio gymnemic acid to rebaudioside is comprised between 2 to 4 parts of rebaudioside for 1 part of gymnemic acid and wherein said gymnemic acid is present in a concentration comprised between 100 and 180 ppm.

The ratio "gymnemic acid to rebaudioside" is comprised between 2 to 4 parts of rebaudioside for 1 part of gymnemic acid.

The gymnemic acid is present in said composition as an extract of the Gymnema sylvestre plant.

Furthermore, the rebaudioside is rebaudioside A, which is present in said composition as a stevia plant extract, which is even more preferably purified so that it contains more than 97, preferably more than 99% of rebaudioside A.

The composition according to the invention can be under powder or liquid form to be added as an ingredient into the composition of an edible food product. As an alternative, the sweetening composition according to the invention can be manufactured under a form which can be sprayed onto, or injected into, an edible food product that is already at least partially manufactured. This can be for instance a snack or a confectionery bar that contains cereals, and which requires a binding agent such as sugar syrup to bind the cereal particles and other ingredients together so that the snack bar can be manufactured by extrusion.

A second aspect of the present invention is directed to a food composition that is sweetened with Rebaudioside A and also comprises a predetermined and controlled amount of gymnemic acid - as an extract of Gymnema sylvestre - so as to diminish the lingering sweet aftertaste while at the same time, conserving substantially the same sweet intensity in the first few seconds of the tasting.

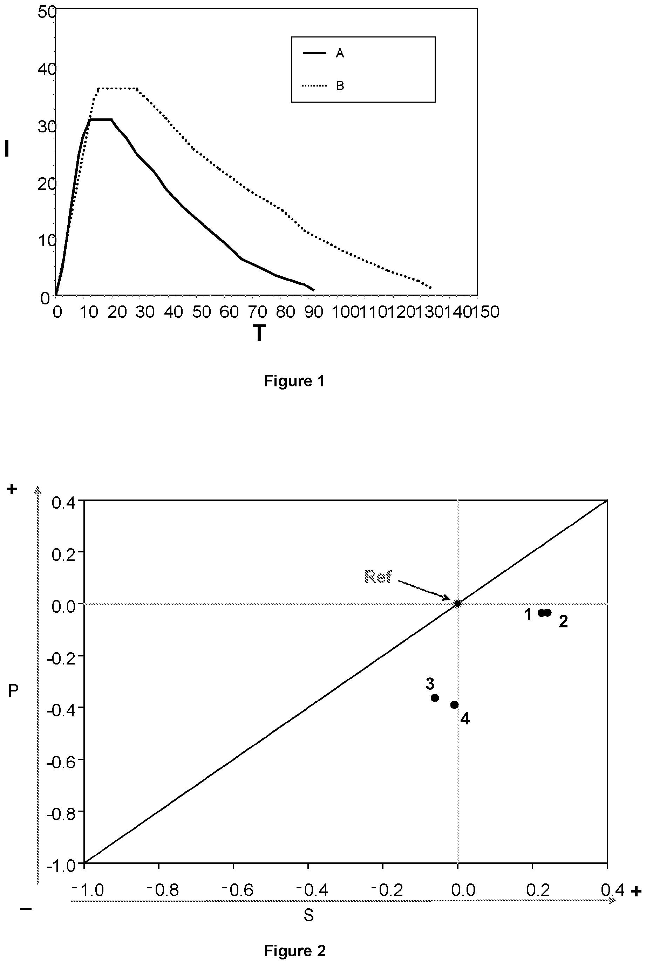

In **figure 1** is illustrated the evolution of sweetness intensity over time for sucrose (sample "A" on the drawing) and rebaudioside A from a Stevia extract (sample "B" on the drawing). The two samples are free of gymnemic acid. It can be seen that in absence of gymnemic acid, the persistency of the sweet taste is much higher for Reb A than for sucrose, even when matching the maximum sweetness of both compounds, Reb A still presents a longer sweet persistency than sucrose.

Now, as illustrated in **figure 2**, the effect of gymnemic acid on lingering sweet aftertaste is demonstrated by sensory tests that were performed by an expert panel of testers. **Figure 2** illustrates how gymnemic acid mixed with Stevia, in the concentration range mentioned hereinabove (2 to 4 parts of rebaudioside A for 1 part of gymnemic acid), lowered the persistency so as to obtain a sweetness persistency much lower than a reference ("Ref") which corresponds for each different mix that was tested, to the same sweetener but taken alone (without gymnemic acid).

In **figure 2**, two different sweeteners were tested, each in combination with two samples of gymnemic acid: one having a high concentration of 162 ppm, and the other sample having a low concentration of 122 ppm of gymnemic acid. All these samples were tested versus a reference which was the pure sweetener without gymnemic acid, marked as "Ref in **figure 2**. On the diagram are shown two axes: the horizontal axis "S" corresponds to the perceived level of sweetness, while the vertical axis "P" corresponds to the persistency level of sweetness over time.

In the figure, the different samples that were tested are referenced to as follows: sample 1 is a Stevia extract (unpurified) with a high concentration of gymnemic acid; 2 is a Stevia extract (unpurified) with a low concentration of gymnemic acid; 3 is rebaudioside A (from a stevia extract purified at 97%) with a high concentration of gymnemic acid; 4 is rebaudioside A (from a stevia extract purified at 97%) with a low concentration of gymnemic acid. The reference point corresponds to the sweetener taken alone, respectively for the two Stevia and the two Reb A samples.

From **figure 2**, it is clear that gymnemic acid - whatever the concentration - has strong reducing effect on the sweetness persistency in Reb A samples (3 and 4), which is lowered compared to the reference (Reb A without gymnemic acid) while keeping an excellent sweetness intensity (no decline).

**Figure 2** also shows that the samples of unpurified Stevia with gymnemic acid have a sweetness intensity that is higher than that of the unpurified Stevia reference without gymnemic acid ("Ref") while at the same time, the sweet lingering aftertaste (persistency) is slightly lowered compared to the reference.

Furthermore, very interestingly and surprisingly, the sample 4 (Reb A with a low concentration of gymnemic acid, in the range of to 122 ppm) provides an identical sweetness intensity compared to that of the reference, while the sweetness persistency is very much reduced, and actually more than that of the sample 3 (Reb A with a higher concentration of gymnemic acid, in the range of 162 ppm).

This proves that at a certain predetermined concentration that is quite low, gymnemic acid not only has an effect on the sweet lingering aftertaste reduction of rebaudioside A, in such a way that Reb A resembles the taste of sucrose in terms of sweetness persistency, but it also has little or no effect on the sweetness intensity of the Reb A, which is very much like that of cane sugar (sucrose). As previously said, this concentration was found to be in the range of - preferably - 100 to 180 ppm, when at the same time, the ratio of said gymnemic acid to sucrose should be in the range of 2 to 4 parts of Rebaudioside A for 1 part of gymnemic acid.

With all the testing that was done, it was found that with the mixes thus tested, the intensity is more than 80% that of sucrose, and the lingering sweet aftertaste is reduced by 14% when adding gymnemic acid, such that the sweet perception is stopped (which means that sweetness is hardly or not at all noticeable) within 100 seconds, and in some cases within 90 seconds after the product has been swallowed or spat (without rinsing the mouth).

This is achieved for minimal concentrations of gymnemic acid, which therefore do not impair the sweetness intensity, but are sufficient to ensure that gymnemic acid has a positive effect on the lingering taste reduction.

The following table gives the optimal concentrations of gymnemic acid in ppm, depending on the concentration of rebaudioside A in a sweetening composition or a food composition according to the invention, and for three different gymnemic acid compositions (high content of gymnemic acid, medium, and low content of the composition in gymnemic acid).

| | **Gymnemic acid (ppm)** | | |
|---|---|---|---|
| **Reb A** | **Low (0.015%)** | **medium** | **Max (0.03%)** |
| **20 ppm** | **4.88** | **6.52** | **9.76** |
| **100ppm** | **24.4** | **32.6** | **48.8** |
| **400ppm** | **97.6** | **130.4** | **195.2** |
| **500ppm** | **122** | **163** | **244** |

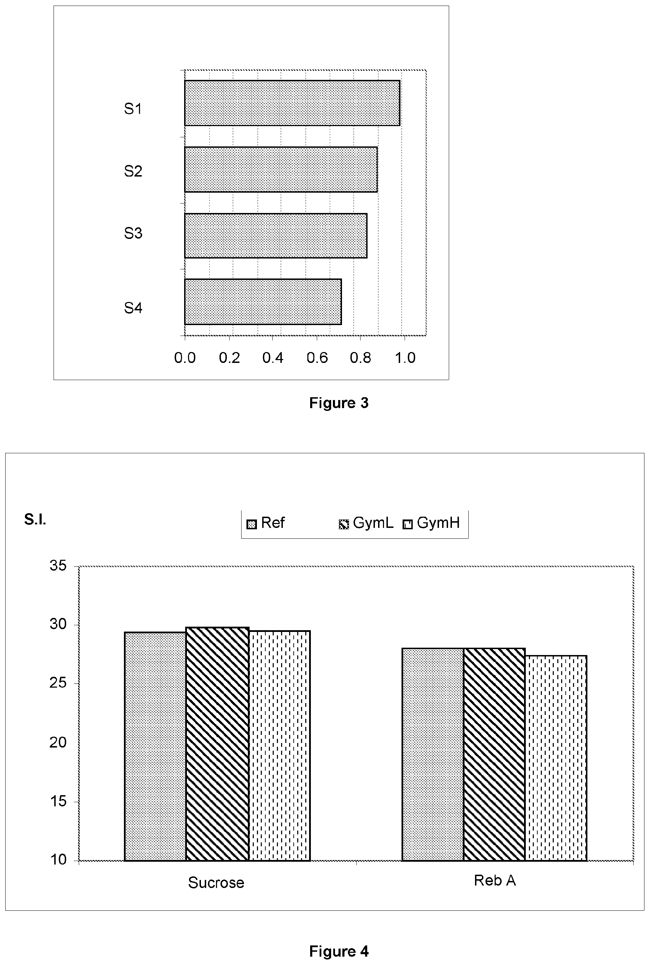

In **figure 3**, is illustrated an assessment of the effect of gymnemic acid on the sweetness and persistency of various sweeteners samples. For the sake of the assessment, a ratio was calculated between persistency and maximum intensity, which is then represented on a scale from 0 to 1. From **figure 2**, it is clear that for Stevia taken alone (sample "S1"), the persistency is very high. When gymnemic acid is added to Stevia at a high concentration of about 162 ppm (sample "S2"), the persistency decreases. The persistency is even more decreased when a low concentration of gymnemic acid (about 122 ppm) is added to Stevia (sample "S3"). In the latter case, the persistency that is measured by the expert panellists approaches that of sucrose taken alone (sample "S4"). This clearly shows in this specific example the effect of gymnemic acid on the sweetness persistency reduction in Stevia, at a range of concentrations that is of about 100 to 180 ppm, according to the present invention.

In **figure 4**, is shown that the effect of gymnemic acid at high (162 ppm) or low (122 ppm) concentrations has respectively, very little or no effect on the sweetness intensity in Rebaudioside A (purified Stevia) samples. This proves that at the ideal concentration of gymnemic acid that is given above (from 100 to 180 ppm), the sweetness persistency is reduced in Stevia or in Reb A, but the maximum sweetness intensity that is perceived remains almost unchanged compared to a reference (Ref) where no gymnemic acid is added. The same conclusions are met when sucrose is tested.

## Claims

1. A composition for sweetening an edible product, comprising at least a rebaudioside, **characterized in that** it further comprises gymnemic acid wherein the ratio gymnemic acid to rebaudioside is comprised between 2 to 4 parts of rebaudioside for 1 part of gymnemic acid and wherein said gymnemic acid is present in a concentration comprised between 100 and 180 ppm.

2. A composition according to any of the preceding claims, wherein said gymnemic acid is present in said composition as an extract of gymnema sylvestre, and/or, wherein said rebaudioside is rebaudioside A, which is present in said composition as a stevia extract.

3. A composition according to claim 3, wherein said stevia extract is purified so that it contains more than 97, preferably more than 99% of rebaudioside A.

4. A composition according to any of the preceding claims, which further comprises at least one second sweetening agent selected from the list of:
(i) natural sweeteners such as Momordica Grosvenorii (Mogrosides IV or V), Thaumatin, Brazzein, Glycyrrhyzic acid and its salts, Curculin, Monellin, Phylloducin, Rubusosides, Mabinlin, dulcoside A, dulcoside B, stevioside, siamenoside, monatin and its salts (monatin SS, RR, RS, SR), thaumatin, hernandulcin, phyllodulcin, glycyphyllin, phloridzin, trilobatin, baiyunoside, osladin, polypodoside A, pterocaryoside A, pterocaryoside B, mukurozioside, phlomisoside I, periandrin I, abrusoside A, cyclocarioside I, erythritol, and/or other natural polyols such as maltitol, mannitol, lactitol, sorbitol, inositol, Isomalt, xylitol, glycerol, propylene glycol, threitol, galactitol, reduced isomalto-oligosaccharides, palatinose, reduced xylo-oligosaccharides, reduced gentio-oligosaccharides, reduced maltose syrup, or reduced glucose syrup, or a mixture thereof, and/or
(ii) artificial sweeteners, such as Aspartame, Cyclamate, Sucralose, Acesulfame K, neotame, Saccharin, Neohesperidin dihydrochalcone, or mixtures thereof.

5. A composition according to any of the preceding claims, which further comprises at least one sweet taste improving carbohydrate, chosen from the list of, but not limited to, sucrose, fructose, glucose, maltose, lactose, mannose, galactose, ribose, rhamnose, trehalose, tagatose, high fructose corn syrup (HFCS).

6. A sweetened food composition comprising at least a rebaudioside as a sweetening agent, **characterized in that** said food composition further comprises gymnemic acid as a sweet lingering taste stopper, wherein the ratio gymnemic acid to rebaudioside is comprised between 2 to 4 parts of rebaudioside for 1 part of gymnemic acid, and wherein said gymnemic acid is present in a concentration comprised between 100 and 180 ppm.

7. A food composition according to claim 6, wherein said gymnemic acid is present in said composition as an extract of Gymnema sylvestre, and/or wherein said rebaudioside is rebaudioside A, which is present in said composition as a stevia extract.

8. A food composition according to claim 7, wherein said stevia extract is purified so that it contains more than 97, preferably more than 99% of rebaudioside A.

9. A food composition according to any of the preceding claims 6 to 8, which further comprises at least one second sweetening agent selected from the list of:
(i) natural sweeteners such as Momordica Grosvenorii (Mogrosides IV or V), Thaumatin, Brazzein, Glycyrrhyzic acid and its salts, Curculin, Monellin, Phylloducin, Rubusosides, Mabinlin, dulcoside A, dulcoside B, stevioside, siamenoside, monatin and its salts (monatin SS, RR, RS, SR), thaumatin, hernandulcin, phyllodulcin, glycyphyllin, phloridzin, trilobatin, baiyunoside, osladin, polypodoside A, pterocaryoside A, pterocaryoside B, mukurozioside, phlomisoside I, periandrin I, abrusoside A, cyclocarioside I, erythritol, and/or other natural polyols such as maltitol, mannitol, lactitol, sorbitol, inositol, Isomalt, xylitol, glycerol, propylene glycol, threitol, galactitol, reduced isomalto-oligosaccharides, palatinose, reduced xylo-oligosaccharides, reduced gentio-oligosaccharides, reduced maltose syrup, or reduced glucose syrup, or a mixture thereof, and/or
(ii) artificial sweeteners, such as Aspartame, Cyclamate, Sucralose, Acesulfame K, neotame, Saccharin, Neohesperidin dihydrochalcone, or mixtures thereof.

10. A food composition according to any of the preceding claims 6 to 9 which further comprises at least one sweet taste improving carbohydrate, chosen from the list of, but not limited to, sucrose, fructose, glucose, maltose, lactose, mannose, galactose, ribose, rhamnose, trehalose, tagatose, high fructose corn syrup (HFCS)

11. A food composition according to any of the preceding claims 6 to 10 which is:
(i) a ready-to-drink beverage comprising at least coffee, tea, cocoa, cereals, or a combination thereof, or
(ii) a water-based beverage comprising, at least one natural or artificial flavor, at least one fruit extract, at least one preservative, at least one mineral salt, or a combination thereof, or
(iii) a chilled dairy product comprising a fresh cheese, a dessert comprising at least one dairy component, an ice cream, a dairy culinary preparation, a sweetened condensed milk, a confectionery product or a bakery product.

## Patentansprüche

1. Zusammensetzung zum Süßen eines essbaren Produkts, mindestens ein Rebaudiosid umfassend, **dadurch gekennzeichnet, dass** sie ferner Gymnemsäure umfasst, wobei das Verhältnis Gymnemsäure zu Rebaudiosid zwischen 2 und 4 Teilen Rebaudiosid pro 1 Teil Gymnemsäure beträgt und wobei die Gymnemsäure in einer Konzentration zwischen 100 und 180 ppm vorliegt.

2. Zusammensetzung nach einem der vorstehenden Ansprüche, wobei die Gymnemsäure in der Zusammensetzung als ein Extrakt von Gymnema sylvestre vorliegt, und/oder wobei das Rebaudiosid Rebaudiosid A ist, das in der Zusammensetzung als Steviaextrakt vorliegt.

3. Zusammensetzung nach Anspruch 3, wobei der Steviaextrakt so gereinigt ist, dass er mehr als 97, vorzugsweise mehr als 99 % Rebaudiosid A enthält.

4. Zusammensetzung nach einem der vorstehenden Ansprüche, die ferner mindestens ein zweites Süßungsmittel umfasst, das aus der folgenden Liste ausgewählt ist:
(i) natürliche Süßungsmittel wie Momordica Grosvenorii (Mogroside IV oder V), Thaumatin, Brazzein, Glycyrrhetinsäure und ihre Salze, Curculin, Monellin, Phylloducin, Rubusoside, Mabinlin, Dulcosid A, Dulcosid B, Steviosid, Siamenosid, Monatin und seine Salze (Monatin SS, RR, RS, SR), Thaumatin, Hernandulcin, Phyllodulcin, Glycyphyllin, Phloridzin, Trilobatin, Baiyunosid, Osladin, Polypodosid A, Pterocaryosid A, Pterocaryosid B, Mukuroziosid, Phlomisosid I, Periandrin I, Abrusosid A, Cyclocariosid I, Erythrit und/oder andere natürliche Polyole wie Maltit, Mannit, Lactit, Sorbit, Inosit, Isomalt, Xylit, Glycerin, Propylenglycol, Threitol, Galactitol, reduzierte Isomalt-Oligosaccharide, Palatinose, reduzierte Xylo-Oligosaccharide, reduzierte Gentio-Oligosaccharide, reduzierter Maltosesirup oder reduzierter Glucosesirup oder eine Mischung davon, und/oder
(ii) künstliche Süßungsmittel wie Aspartam, Cyclamat, Sucralose, Acesulfam K, Neotam, Saccharin, Neohesperidindihydrochalcon oder Mischungen davon.

5. Zusammensetzung nach einem der vorstehenden Ansprüche, die ferner mindestens ein den süßen Geschmack verbesserndes Kohlenhydrat umfasst, ausgewählt aus der Liste, die unter anderem Saccharose, Fructose, Glucose, Maltose, Lactose, Mannose, Galactose, Ribose, Rhamnose, Trehalose, Tagatose, Maissirup mit hohem Fructosegehalt (HFCS) umfasst.

6. Gesüßte Nahrungsmittelzusammensetzung, mindestens ein Rebaudiosid als Süßungsmittel umfassend, **dadurch gekennzeichnet, dass** die Nahrungsmittelzusammensetzung ferner Gymnemsäure als Stopper für einen anhaltend süßen Geschmack umfasst, wobei das Verhältnis von Gymnemsäure zu Rebaudiosid zwischen 2 bis 4 Teilen Rebaudiosid zu 1 Teil Gymnemsäure liegt, und wobei die Gymnemsäure in einer Konzentration zwischen 100 und 180 ppm vorhanden ist.

7. Nahrungsmittelzusammensetzung nach Anspruch 6, wobei die Gymnemsäure in der Zusammensetzung als ein Extrakt von Gymnema sylvestre vorliegt und/oder wobei das Rebaudiosid A, das in der Zusammensetzung vorliegt, als Steviaextrakt vorliegt.

8. Nahrungsmittelzusammensetzung nach Anspruch 7, wobei der Steviaextrakt gereinigt ist, so dass er mehr als 97, vorzugsweise mehr als 99 % an Rebaudiosid A enthält.

9. Nahrungsmittelzusammensetzung nach einem der vorstehenden Ansprüche 6 bis 8, die ferner mindestens ein zweites Süßungsmittel enthält, das ausgewählt ist aus der folgenden Liste:
(i) natürliche Süßungsmittel wie Momordica Grosvenorii (Mogroside IV oder V), Thaumatin, Brazzein, Glycyrrhetinsäure und ihre Salze, Curculin, Monellin, Phylloducin, Rubusoside, Mabinlin, Dulcosid A, Dulcosid B, Steviosid, Siamenosid, Monatin und seine Salze (Monatin SS, RR, RS, SR), Thaumatin, Hernandulcin, Phyllodulcin, Glycyphyllin, Phloridzin, Trilobatin, Baiyunosid, Osladin, Polypodosid A, Pterocaryosid A, Pterocaryosid B, Mukuroziosid, Phlomisosid I, Periandrin I, Abrusosid A, Cyclocariosid I, Erythrit und/oder andere natürliche Polyole wie Maltit, Mannit, Lactit, Sorbit, Inosit, Isomalt, Xylit, Glycerin, Propylenglycol, Threitol, Galaktitol, reduzierte Isomalt-Oligosaccharide, Palatinose, reduzierte Xylo-Oligosaccharide, reduzierte Gentio-Oligosaccharide, reduzierter Maltosesirup oder reduzierter Glucosesirup oder eine Mischung davon, und/oder
(ii) künstliche Süßungsmittel wie Aspartam, Cyclamat, Sucralose, Acesulfam K, Neotam, Saccharin, Neohesperidindihydrochalcon oder Mischungen davon.

10. Nahrungsmittelzusammensetzung nach einem der vorstehenden Ansprüche 6 bis 9, die ferner mindestens ein den süßen Geschmack verbesserndes Kohlenhydrat umfasst, ausgewählt aus der Liste, die unter anderem Saccharose, Fructose, Glucose, Maltose, Lactose, Mannose, Galactose, Ribose, Trehalose, Rhamnose, Trehalose, Tagatose, Maissirup mit hohem Fructosegehalt (HFCS) umfasst.

11. Nahrungsmittelzusammensetzung nach einem der vorstehenden Ansprüche 6 bis 10, die folgendes ist:
(i) ein trinkfertiges Getränk, das zumindest Kaffee, Tee, Kakao, Getreide oder eine Kombination davon umfasst, oder
(ii) ein Getränk auf Wasserbasis, das mindestens einen natürlichen oder künstlichen Geschmacksstoff, mindestens einen Fruchtextrakt, mindestens ein Konservierungsmittel, mindestens ein Mineralsalz oder eine Kombination davon umfasst, oder
(iii) ein gekühltes Molkereiprodukt, umfassend einen Frischkäse, ein Dessert, das mindestens einen Molkereibestandteil umfasst, eine Eiscreme, eine kulinarische Milchproduktzubereitung, eine gesüßte kondensierte Milch, ein Süßwarenprodukt oder ein Gebäck.

## Revendications

1. Composition pour édulcorer un produit comestible, comprenant au moins un rébaudioside, **caractérisée en ce qu'**elle comprend en outre de l'acide gymnémique, dans laquelle le rapport acide gymnémique à rébaudioside est compris entre 2 à 4 parties de rébaudioside pour 1 partie d'acide gymnémique et dans laquelle ledit acide gymnémique est présent en une concentration comprise entre 100 et 180 ppm.

2. Composition selon l'une quelconque des revendications précédentes, dans laquelle ledit acide gymnémique est présent dans ladite composition en tant qu'extrait de gymnema sylvestre, et/ou dans laquelle ledit rébaudioside est le rébaudioside A, qui est présent dans ladite composition en tant qu'extrait de stévia.

3. Composition selon la revendication 3, dans laquelle ledit extrait de stévia est purifié de sorte qu'il contient plus de 97, de préférence plus de 99 % de rébaudioside A.

4. Composition selon l'une quelconque des revendications précédentes, qui comprend en outre au moins un deuxième agent édulcorant choisi dans la liste de :
(i) édulcorants naturels tels que Momordica Grosvenorii (Mogrosides IV ou V), Thaumatine, Brazzéine, acide glycyrrhyzique et ses sels, Curculine, Monelline, Phylloducine, Rubusosides, Mabinline, dulcoside A, dulcoside B, stévioside, siaménoside, monatine et ses sels (monatine SS, RR, RS, SR), thaumatine, hernandulcine, phyllodulcine, glycyphylline, phloridzine, trilobatine, baiyunoside, osladine, polypodoside A, ptérocaryoside A, ptérocaryoside B, mukurozioside, phlomisoside I, périandrine I, abrusoside A, cyclocarioside I, érythritol et/ou d'autres polyols naturels tels que maltitol, mannitol, lactitol, sorbitol, inositol, isomalt, xylitol, glycérol, propylène glycol, thréitol, galactitol, isomalto-oligosaccharides réduits, palatinose, xylo-oligosaccharides réduits, gentio-oligosaccharides réduits, sirop de maltose réduit, ou sirop de glucose réduit, ou un mélange de ceux-ci, et/ou
(ii) édulcorants artificiels, tels qu'Aspartame, Cyclamate, Sucralose, Acésulfame K, néotame, Saccharine, Néohespéridine dihydrochalcone, ou des mélanges de ceux-ci.

5. Composition selon l'une quelconque des revendications précédentes, qui comprend en outre au moins un glucide d'amélioration de goût sucré, choisi parmi la liste de, mais sans caractère limitatif, saccharose, fructose, glucose, maltose, lactose, mannose, galactose, ribose, rhamnose, tréhalose, tagatose, sirop de maïs à haute teneur en fructose (HFCS).

6. Composition alimentaire édulcorée comprenant au moins un rébaudioside en tant qu'agent édulcorant, **caractérisée en ce que** ladite composition alimentaire comprend en outre de l'acide gymnémique dans laquelle le rapport acide gymnémique à rébaudioside est compris entre 2 à 4 parties de rébaudioside pour 1 partie d'acide gymnémique et dans laquelle ledit acide gymnémique est présent en une concentration comprise entre 100 et 180 ppm.

7. Composition alimentaire selon la revendication 6, dans laquelle ledit acide gymnémique est présent dans ladite composition en tant qu'extrait de gymnema sylvestre, et/ou dans laquelle ledit rébaudioside est le rébaudioside A, qui est présent dans ladite composition en tant qu'extrait de stévia.

8. Composition alimentaire selon la revendication 7, dans laquelle ledit extrait de stévia est purifié de sorte qu'il contient plus de 97, de préférence plus de 99 % de rébaudioside A.

9. Composition alimentaire selon l'une quelconque des revendications 6 à 8 précédentes, qui comprend en outre au moins un deuxième agent édulcorant choisi dans la liste de :
(i) édulcorants naturels tels que Momordica Grosvenorii (Mogrosides IV ou V), Thaumatine, Brazzéine, acide glycyrrhyzique et ses sels, Curculine, Monelline, Phylloducine, Rubusosides, Mabinline, dulcoside A, dulcoside B, stévioside, siaménoside, monatine et ses sels (monatine SS, RR, RS, SR), thaumatine, hernandulcine, phyllodulcine, glycyphylline, phloridzine, trilobatine, baiyunoside, osladine, polypodoside A, ptérocaryoside A, ptérocaryoside B, mukurozioside, phlomisoside I, périandrine I, abrusoside A, cyclocarioside I, érythritol et/ou d'autres polyols naturels tels que maltitol, mannitol, lactitol, sorbitol, inositol, isomalt, xylitol, glycérol, propylène glycol, thréitol, galactitol, isomalto-oligosaccharides réduits, palatinose, xylo-oligosaccharides réduits, gentio-oligosaccharides réduits, sirop de maltose réduit, ou sirop de glucose réduit, ou un mélange de ceux-ci, et/ou
(ii) édulcorants artificiels, tels que Aspartame, Cyclamate, Sucralose, Acésulfame K, néotame, Saccharine, Néohespéridine dihydrochalcone, ou des mélanges de ceux-ci.

10. Composition alimentaire selon l'une quelconque des revendications précédentes 6 à 9, qui comprend en outre au moins un glucide d'amélioration de goût sucré, choisi parmi la liste de, mais sans caractère limitatif, saccharose, fructose, glucose, maltose, lactose, mannose, galactose, ribose, rhamnose, tréhalose, tagatose, sirop de maïs à haute teneur en fructose (HFCS)

11. Composition alimentaire selon l'une quelconque des revendications 6 à 10 précédentes, qui est :
(i) une boisson prête à boire comprenant au moins du café, du thé, du cacao, des céréales, ou une combinaison de ceux-ci, ou
(ii) une boisson à base d'eau comprenant au moins un arôme naturel ou artificiel, au moins un extrait de fruit, au moins un conservateur, au moins un sel minéral, ou une combinaison de ceux-ci, ou
(iii) un produit laitier réfrigéré comprenant un fromage frais, un dessert comprenant au moins un composant laitier, une crème glacée, une préparation culinaire laitière, un lait condensé édulcoré, un produit de confiserie ou un produit de boulangerie.
